(19) Europäisches Patentamt
European Patent Office
Office européen des brevets

(11) **EP 4 448 650 B1**

(12) **EUROPEAN PATENT SPECIFICATION**

(45) Date of publication and mention
of the grant of the patent:
**14.01.2026 Bulletin 2026/03**

(21) Application number: **22859494.1**

(22) Date of filing: **16.12.2022**

(51) International Patent Classification (IPC):
**C08L 23/08** (2025.01)

(52) Cooperative Patent Classification (CPC):
(C-Sets available)
**C08L 23/0815;** C08L 2203/14; C08L 2312/00
(Cont.)

(86) International application number:
**PCT/US2022/081846**

(87) International publication number:
**WO 2023/115024 (22.06.2023 Gazette 2023/25)**

(54) **ETHYLENE/ALPHA-OLEFIN/NON-CONJUGATED POLYENE INTERPOLYMER COMPOSITIONS OF LOW VISCOSITY AND FAST CURE RATE**

INTERPOLYMERZUSAMMENSETZUNGEN AUS ETHYLEN/ALPHA-OLEFIN/ NICHTKONJUGIERTEM POLYEN MIT NIEDRIGER VISKOSITÄT UND SCHNELLER HÄRTUNGSGESCHWINDIGKEIT

COMPOSITIONS D'INTERPOLYMÈRES ÉTHYLÈNE/ALPHA-OLÉFINE/POLYÈNE NON CONJUGUÉ À FAIBLE VISCOSITÉ ET À DURCISSEMENT RAPIDE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **17.12.2021 US 202163265652 P**

(43) Date of publication of application:
**23.10.2024 Bulletin 2024/43**

(73) Proprietor: **Dow Global Technologies LLC Midland, MI 48674 (US)**

(72) Inventor: **BAIDYA, Debatosh 65201 Wiesbaden (DE)**

(74) Representative: **Boult Wade Tennant LLP Salisbury Square House 8 Salisbury Square London EC4Y 8AP (GB)**

(56) References cited:
WO-A1-2011/079207    WO-A1-2013/039739
WO-A1-2014/035467    WO-A1-2019/157688

(52) Cooperative Patent Classification (CPC): (Cont.)

C-Sets
**C08L 23/0815, C08L 23/16**

**Description**

REFERENCE TO RELATED APPLICATIONS

This application claims the benefit of priority to U.S. Provisional Application No. 63/265,652, filed on December 17, 2021.

BACKGROUND OF THE INVENTION

There is a need for polymer formulations for the injection molding of complex parts, such as complex profiles. In addition, such profiles are typically formed from a foamed formulation. These formulations must have low viscosity for a fast, uniform flow within the mold cavity, and a fast cure response to build elasticity and strength during the injection molding process. Developing such a polymer formulation is an unmet need in the market.

U.S. Patent 8,389,634 discloses a thermoplastic composition that comprises the following: (i) from 1 to 99 percent, by weight of the total composition, of at least one thermoplastic copolymer, for example, styrene block copolymers, and (ii) from 1 to 99 percent, by weight of the total composition, of at least one homogeneously branched ethylene/alpha-olefin interpolymer, for example ethylene/1-octene, having a density less than, or equal to, 0.899 g/cc and a Brookfield viscosity of greater than 500 cP (350°F.). See abstract. Other thermoplastic polymers include, but are not limited to, the natural or synthetic resins, such as styrene block copolymers, rubbers, linear low density polyethylene (LLDPE), high density polyethylene (HDPE), low density polyethylene (LDPE), ethylene/vinyl acetate (EVA) copolymer, ethylene-carboxylic acid copolymers (EAA), ethylene acrylate copolymers, polybutylene, polybutadiene, nylons, polycarbonates, polyesters, polypropylene, ethylene-propylene interpolymers such as ethylene-propylene rubber, ethylene-propylene-diene monomer rubbers, chlorinated polyethylene, thermoplastic vulcanizates, ethylene ethylacrylate polymers (EEA), ethylene styrene interpolymers (ES), polyurethanes, as well as graft-modified olefin polymers, and combinations of two or more of these polymers (see column 11, lines 1-16). See also, column 2, lines 42-56; column 3, line 7-22; and column 13, line 58, to column 14, line 3. The compositions can be used in injection molding processes (see, for example, column 11, lines 47-51, and column 13, lines 26-41).

CN107418061A (machine translation) discloses a polymer formulation for a door weather strip sponge, and containing two ethylene/propylene/diene rubbers, an activated zinc oxide, stearic acid, a dispersant, erucyl amide, PEG 4000, a POE, paraffin oil, carbon black, sulfur, an hygroscopic agent, an accelerator, a foaming agent and a blowing agent (see abstract of machine translation). The POE is a polyolefin elastomer (see page 4, first paragraph of machine translation).

International Publication WO2006/004750 discloses composition and methods for improving the adhesion of a film to a non-woven, a film to another film, or a nonwoven to another nonwoven. Depending on the structure, the improvement can be achieved by using low viscosity, low density ethylene-based or propylene-based polymers, which physically anchor to the substrate, or by using a similar polymer in a blend (components A and B) with one of the substrate film polymers to improve flow and adhesion (see abstract and claims 1-3). Useful polymers include thermoplastic compositions containing at least one low viscosity, homogeneously branched ethylene polymer, having a density from 0.855 g/cc to 0.899 g/cc, and a Brookfield viscosity of at least 500 cP, at 350°F. The thermoplastic composition may contain at least 50 wt percent, based on the total weight of the composition, of the thermoplastic polymer. Suitable examples of the thermoplastic polymer include, but are not limited to, synthetic rubbers, linear low density polyethylene (LLDPE), high density polyethylene (HDPE), low density polyethylene (LDPE), ethylene vinyl acetate (EVA) copolymer, polybutadiene and ethylene-propylene-diene. Additional useful polymers include polymer blends containing isotactic polypropylene and an alpha-olefin/propylene copolymer. See page 19, lines 3-17.

U.S. Publication 2015/0376385 discloses a composition comprising the following: A) an ethylene/alpha-olefin/diene interpolymer, B) a functionalized ethylene-based polymer selected from the group consisting of the following: a) an anhydride grafted ethylene/alpha-olefin interpolymer; b) an acid functionalized ethylene-based polymer, and c) an ester functionalized ethylene-based polymer; and C) a crosslinking agent; and wherein the weight ratio of component A to component B is from 98:2 to 60:40 (see abstract). In an embodiment, the ethylene/alpha-olefin/diene interpolymer is disclosed as having a Mooney viscosity (ML (1 + 4) at 125°C) from 50 to 300 (see paragraph [0068]).

WO2013/039739 A1 relates to a composition comprising the following: A) an ethylene/alpha-olefin/diene interpolymer; B) from 40 to 70 weight percent, based on sum weight of A and B, of an ethylene/alpha-olefin copolymer; and C) a sulfur-containing compound.

WO2011/079207 A1 relates to a composition comprising at least the following: A) an ethylene/a-olefin/polyene interpolymer, B) an ethylene/a-olefin copolymer, C) optionally at least one filler, D) at least one crosslinking agent, E) at least one blowing agent.

WO2019/157688 A1 relates to a composition comprising the following components: A) an ethylene/alpha-olefin/diene interpolymer with MV (1+4, 125°C) ≥ 50; B) an ethylene/alpha-olefin copolymer with MV (1+4, 125°C) < 70; C) MgO; D) at least one carbon black filler; E) at least one hindered amine antioxidant; F) at least one peroxide.

WO2014/035467 A1 relates to a composition comprising the following: A) a first polymer selected from the following: i) an ethylene/alpha-olefin interpolymer; or ii) an ethylene/alpha-olefin multi-block interpolymer; B) a second polymer selected from the following: iii) an ethylene/alpha-olefin interpolymer; iv) an ethylene/alpha-olefin/nonconjugated diene interpolymer; or v) an ethylene/alpha-olefin multi-block interpolymer; and wherein the first polymer has a density from 0.880 to 0.910 g/cc, and the second polymer has a density less than, or equal to, 0.867 g/cc, and wherein the weight ratio of the first polymer to the second polymer is from 0.5 to 9.

As discussed above, there remains a need for polymer compositions with excellent compound flows and fast cure rates, for the injection molding of complex parts of good quality and strength, and improved part productivity. This need has been met by the following invention.

SUMMARY OF THE INVENTION

A composition comprising at least the following *components:*

a) at least one ethylene/alpha-olefin/non-conjugated polyene interpolymer comprising a Mooney Viscosity (ML 1+4, 125°C) from 10 to 40, and
b) at least one ethylene/alpha-olefin interpolymer comprising a melt viscosity (177°C) $\leq$ 50,000 mPa·s; and

wherein the composition has a Mooney Viscosity (ML 1+4, 100°C) from 6.0 to 10.

DETAILED DRESCRIPTION OF THE INVENTION

Compositions have been discovered that have fast flow rates and fast cure rates for the injection molding of complex parts.

As discussed above, a composition is provided, and which comprises at least the following *components:*

a) at least one ethylene/alpha-olefin/non-conjugated polyene interpolymer comprising a Mooney Viscosity (ML 1+4, 125°C) from 10 to 40, and
b) at least one ethylene/alpha-olefin interpolymer comprising a melt viscosity (177°C) $\leq$ 50,000 mPa·s; and wherein the composition has a Mooney Viscosity (ML 1+4, 100°C) from 6.0 to 10.

In one embodiment, or a combination of two or more embodiments, each described herein, the at least one interpolymer of *component a* has a Mooney Viscosity (ML1+4 at 125°C) $\geq$ 11, or $\geq$ 12, or $\geq$ 14, or $\geq$ 16, or $\geq$ 18, or $\geq$ 20. In one embodiment, or a combination of two or more embodiments, each described herein, the at least one interpolymer of *component a* has a Mooney Viscosity (ML1+4 at 125°C) $\leq$ 38, or $\leq$ 36, or $\leq$ 34, or $\leq$ 32, or $\leq$ 30.

In one embodiment, or a combination of two or more embodiments, each described herein, the at least one interpolymer of *component a* has a density $\geq$ 0.850, or $\geq$ 0.852, or $\geq$ 0.854, or $\geq$ 0.856, or $\geq$ 0.858, or $\geq$ 0.859, or $\geq$ 0.860 g/cc, or $\geq$ 0.880, or $\geq$ 0.890, or $\geq$ 0.900, or $\geq$ 0.910, or $\geq$ 0.920, or $\geq$ 0.950 (1 cc = 1 cm$^3$). In one embodiment, or a combination of two or more embodiments, each described herein, the at least one interpolymer of *component a* has a density $\leq$ 0.950, or $\leq$ 0.920, or $\leq$ 0.910, or $\leq$ 0.900, or $\leq$ 0.890, or $\leq$ 0.880, or $\leq$ 0.870, or $\leq$ 0.868, or $\leq$ 0.866, or $\leq$ 0.864, or $\leq$ 0.863, or $\leq$ 0.862, or $\leq$ 0.861 g/cc.

In one embodiment, or a combination of two or more embodiments, each described herein, the at least one interpolymer of *component a* is an ethylene/alpha-olefin/nonconjugated diene interpolymer, further an ethylene/alpha-olefin/non-conjugated diene terpolymer, and further an EPDM.

In one embodiment, or a combination of two or more embodiments, each described herein, the at least one interpolymer of *component b* has a melt viscosity (177°C) $\geq$ 5,000, or $\geq$ 5,500, or $\geq$ 6,000, or $\geq$ 6,200, or $\geq$ 6,400, or $\geq$ 6,600, or $\geq$ 6,800, or $\geq$ 7,000, or $\geq$ 7,200, or $\geq$ 7,400, or $\geq$ 7,600, or $\geq$ 7,800, or $\geq$ 8,000 mPa·s. In one embodiment, or a combination of two or more embodiments, each described herein, the at least one interpolymer of *component b* has a melt viscosity (177°C) $\leq$ 45,000, or $\leq$ 40,000, or $\leq$ 35,000, or $\leq$ 30,000, or $\leq$ 28,000, or $\leq$ 26,000, or $\leq$ 24,000, or $\leq$ 22,000, or $\leq$ 20,000, or $\leq$ 18,000 mPa·s.

In one embodiment, or a combination of two or more embodiments, each described herein, the at least one interpolymer of *component b* has a density $\geq$ 0.860, or $\geq$ 0.862, or $\geq$ 0.864, or $\geq$ 0.866, or $\geq$ 0.868, or $\geq$ 0.870 g/cc. In one embodiment, or a combination of two or more embodiments, each described herein, the at least one interpolymer of *component b* has a density $\leq$ 0.890, or $\leq$ 0.885, or $\leq$ 0.880, or $\leq$ 0.879, or $\leq$ 0.878, or $\leq$ 0.877, or $\leq$ 0.876, or $\leq$ 0.875 g/cc, or $\leq$ 0.874 g/cc.

In one embodiment, or a combination of two or more embodiments, each described herein, the at least one interpolymer of *component b* has a melting point (Tm) $\geq$ 50°C, or $\geq$ 55°C, or $\geq$ 58°C, or $\geq$ 60°C, or $\geq$ 62°C, or $\geq$ 64°C, or $\geq$

65°C, or ≥ 66°C, or ≥ 67°C, or ≥ 68°C and/or ≤ 85°C, or ≤ 82°C, or ≤ 80°C, or ≤ 78°C, or ≤ 76°C, or ≤ 74°C, or ≤ 73°C, or ≤ 72°C, or ≤ 71°C, or ≤ 70°C.

In one embodiment, or a combination of two or more embodiments, each described herein, the at least one interpolymer of *component b* is an ethylene/alpha-olefin copolymer.

In one embodiment, or a combination of two or more embodiments, each described herein, the composition has a Mooney Viscosity (ML1+4 at 100°C) ≥ 6.2, or ≥ 6.4, or ≥ 6.6, or ≥ 6.8, or ≥ 7.0, or ≥ 7.1, or ≥ 7.2. In one embodiment, or a combination of two or more embodiments, each described herein, the composition has a Mooney Viscosity (ML1+4 at 100°C) ≤ 9.5, or ≤ 9.0, or ≤ 8.7, or ≤ 8.5, or ≤ 8.2, or ≤ 8.0, or ≤ 7.5.

In one embodiment, or a combination of two or more embodiments, each described herein, the ratio of the density of the at least one interpolymer of *component a* to the density of the at least one interpolymer of *component b* is ≥ 0.970, or ≥ 0.972, or ≥ 0.974, or ≥ 0.976, or ≥ 0.978, or ≥ 0.980, or ≥ 0.982, or ≥ 0.983, or ≥ 0.984, and/or ≤ 1.00, or ≤ 0.998, or ≤ 0.996, or ≤ 0.994, or ≤ 0.992, or ≤ 0.991, or ≤ 0.990, or ≤ 0.989.

In one embodiment, or a combination of two or more embodiments, each described herein, the weight ratio of *component a* to *component b* is ≥ 1.5, or ≥ 1.6, or ≥ 1.7, or ≥ 1.8, or ≥ 1.9, or ≥ 2.0, or ≥ 2.1, or ≥ 2.2, or ≥ 2.3, or ≥ 2.4, or ≥ 2.5, or ≥ 2.6, or ≥ 2.7, or ≥ 2.8, or ≥ 2.9, or ≥ 3.0 and/or ≤ 20, or ≤ 15, or ≤ 12, or ≤ 10, or ≤ 9.5, or ≤ 9.0, or ≤ 8.5, or ≤ 8.0, or ≤ 7.5, or ≤ 7.0, or ≤ 6.5, or ≤ 6.0, or ≤ 5.5, or ≤ 5.0, or ≤ 4.8, or ≤ 4.6, or ≤ 4.4, or ≤ 4.2, or ≤ 4.1, or ≤ 4.0, or ≤ 3.0, or ≤ 2.5, or ≤ 2.0.

In one embodiment, or a combination of two or more embodiments, each described herein, the composition comprises ≥ 20 wt%, or ≥ 22 wt%, or ≥ 24 wt%, or ≥ 26 wt%, or ≥ 28 wt%, or ≥ 30 wt%, or ≥ 32 wt%, or ≥ 34 wt%, and/or ≤ 50 wt%, or ≤ 48 wt%, or ≤ 46 wt%, or ≤ 44 wt%, or ≤ 42 wt%, or ≤ 40 wt%, or ≤ 38 wt%, or ≤ 36 wt%, of the sum of *components a* and *b*, based on the weight of the composition.

In one embodiment, or a combination of two or more embodiments, each described herein, the composition further comprises an oil (*component c*).

In one embodiment, or a combination of two or more embodiments, each described herein, the composition further comprises one or more fillers (*component d*).

In one embodiment, or a combination of two or more embodiments, each described herein, the composition further comprises at least one crosslinking agent, and further at least two crosslinking agents.

In one embodiment, or a combination of two or more embodiments, each described herein, the composition further comprises a blowing agent.

In one embodiment, or a combination of two or more embodiments, each described herein, the composition, upon thermal treatment at a temperature of 180°C, has a [(MH-ML)/ tc90 ] value ≥ 2.00, or ≥ 2.10, or ≥ 2.20, or ≥ 2.30, or ≥ 2.40, or ≥ 2.50, or ≥ 2.60, or ≥ 2.80, or ≥ 3.00, or ≥ 3.20, or ≥ 3.40, or ≥ 3.50, or ≥ 3.60 dN*m/min, and/or ≤ 5.00, or ≤ 4.50, or ≤ 4.00, or ≤ 3.60, or ≤ 3.50 dN*m/min. The MH, ML and the tc90 values are determined by MDR as described herein.

Also provided is a crosslinked composition formed from the composition of any one embodiment or a combination of two or more embodiments as described herein.

Also provided is an article comprising at least one component formed from the composition of any one embodiment or a combination of two or more embodiments as described herein.

Also provided is a process to form a crosslinked composition, said process comprising thermally treating the composition of any one embodiment or a combination of two or more embodiments as described herein.

*Component a*

The ethylene/alpha-olefin/nonconjugated polyene interpolymers, as described herein, comprises, in polymerize form, ethylene, an alpha-olefin, and a nonconjugated polyene. The alpha-olefin may be either an aliphatic or an aromatic compound. Alpha-olefins include, but are not limited to, a C3-C20 alpha-olefins, further C3-C10 alpha-olefins, further C3-C8 alpha-olefins. In one embodiment, the interpolymer is an ethylene/propylene/nonconjugated diene interpolymer, further a terpolymer, further an EPDM. Suitable examples of nonconjugated polyenes include the C4-C40 nonconjugated dienes. Nonconjugated dienes include, but are not limited to, 5-ethylidene-2-norbornene (ENB), 5-vinyl-2-norbornene (VNB), dicyclopentadiene, 1,4-hexadiene, or 7-methyl-1,6-octadiene, and further from ENB, VNB, dicyclopentadiene or 1,4-hexadiene, and further from ENB or VNB, and further ENB.

*Component b*

The ethylene/alpha-olefin interpolymer comprises, in polymerize form, ethylene, and an alpha-olefin. Alpha-olefins include, but are not limited to, a C3-C20 alpha-olefins, further C3-C10 alpha-olefins, further C3-C8 alpha-olefins, such as propylene, 1-butene, 1-hexene, and 1-octene.

*Additives*

An inventive composition may comprise one or more additives. Suitable additives include, but are not limited to, fillers, plasticizers (for example, oils), processing aids, stabilizers (for example, antioxidants, antiozonants, UV stabilizers), crosslinking agents, activators, blowing agents, scavengers, and combinations thereof. Fillers include, but are not limited to, carbon black, calcium carbonate, talc, silicon oxide, aluminum oxide, kaolinite, montmorillonite, silicates (for example, of aluminum, magnesium, calcium), titanium dioxide, natural fibers, synthetic fibers, and the like.

Oils include, but are not limited to, paraffinic oils, naphthenic oils and polyalkylbenzene oils. Blowing agents include, but are not limited to, azodicarbonamide (ADC), p,p'-oxybis-(benzene sulfonyl hydrazide) (OBSH), isocyanate, and sodium bicarbonate.

Stabilizers include, but are not limited to, hindered phenols, bisphenols, thiobisphenols, and substituted hydroquinones. Typically, one or more stabilizers, in "ppm" amounts, are added to a polymer or a polymer composition. Processing aids include, but are not limited to, fatty acids and PEG compounds, oligomers and polymers.

Crosslinking agents include, but are not limited to, those that are sulfur based agents (for example, elemental sulfur), tetramethylthiuram disulfide (TMTD), dipentamethylenethiuram tetrasulfide (DPTT), 2-mercaptobenzothiazole (MBT), 2-mercaptobenzothiazolate disulfide (MBTS), zinc-2-mercaptobenozothiazolate (ZMBT), zinc diethyldithiocarbamate zinc (ZDEC), zinc dibutyldithiocarbamate (ZDBC), dipentamethylenethiuram tetrasulfide (DPTT), and mixtures thereof. Additional crosslinking agents include, but are not limited to, peroxides, phenolic resins, azides, vinyl silanes, hydrosilylation agents, substituted ureas, substituted guanidines, substituted xanthates, substituted dithiocarbamates, and mixtures thereof.

DEFINITIONS

Unless stated to the contrary, implicit from the context, or customary in the art, all parts and percents are based on weight, and all test methods are current as of the filing date of this disclosure.

The term "composition," as used herein, includes a mixture of materials, which comprise the composition, as well as reaction products and decomposition products formed from the materials of the composition. Any reaction product or decomposition product is typically present in trace or residual amounts.

The term "polymer," as used herein, refers to a polymeric compound prepared by polymerizing monomers, whether of the same or a different type. The generic term polymer thus, includes the term homopolymer (employed to refer to polymers prepared from only one type of monomer, with the understanding that trace amounts of impurities can be incorporated into the polymer structure), and the term interpolymer as defined hereinafter. Trace amounts of impurities, such as catalyst residues, can be incorporated into and/or within the polymer. Typically, a polymer is stabilized with very low amounts ("ppm" amounts) of one or more stabilizers.

The term "interpolymer," as used herein, refers to polymer prepared by the polymerization of at least two different types of monomers. The term interpolymer thus includes the term copolymer (employed to refer to polymers prepared from two different types of monomers) and polymers prepared from more than two different types of monomers.

The term "olefin-based polymer," as used herein, refers to a polymer that comprises, in polymerized form, at least 50 wt% or a majority weight percent of an olefin, such as ethylene or propylene (based on the weight of the polymer), and optionally may comprise one or more comonomers.

The term "propylene-based polymer," as used herein, refers to a polymer that comprises, in polymerized form, at least 50 wt% or a majority weight percent of propylene (based on the weight of the polymer), and optionally may comprise one or more comonomers.

The term "ethylene-based polymer," as used herein, refers to a polymer that comprises, in polymerized form, at least 50 wt% or a majority weight percent of ethylene (based on the weight of the polymer), and optionally may comprise one or more comonomers.

The term "ethylene/alpha-olefin interpolymer," as used herein, refers to a random interpolymer that comprises, in polymerized form, at least 50 wt% or a majority weight percent of ethylene (based on the weight of the interpolymer), and an alpha-olefin.

The term "ethylene/alpha-olefin/nonconjugated polyene interpolymer," as used herein, refers to an interpolymer that comprises, in polymerized form, ethylene, an alpha-olefin, and a nonconjugated polyene. In one embodiment, the "ethylene/alpha-olefin/nonconjugated polyene interpolymer," comprises, in polymerized form, at least 50 wt% or a majority weight percent of ethylene (based on the weight of the interpolymer). The term "ethylene/alpha-olefin/nonconjugated diene interpolymer," as used herein, refers to an interpolymer that comprises, in polymerized form, ethylene, an alpha-olefin, and a nonconjugated diene. In one embodiment, the "ethylene/alpha-olefin/nonconjugated diene interpolymer," comprises, in polymerized form, at least 50 wt% or a majority weight percent of ethylene (based on the weight of the interpolymer). Note, the terms "ethylene/alpha-olefin/nonconjugated polyene terpolymer" and "ethylene/alpha-olefin/nonconjugated diene terpolymer" are similarly defined; however, for each, the terpolymer comprises, in polymerized form, ethylene, the alpha-olefin and the polyene (or diene) as the only three monomer types.

The term, "ethylene/alpha-olefin copolymer," as used herein, refers to a random copolymer that comprises, in polymerized form, at least 50 wt% or a majority amount of ethylene (based on the weight of the copolymer), and an alpha-olefin, as the only two monomer types.

The phrase "a majority weight percent," as used herein, in reference to a polymer (or interpolymer or terpolymer or copolymer), refers to the amount of monomer present in the greatest amount in the polymer.

The term "crosslinked composition," as used herein, refers to a composition that has a network structure due to the formation of chemical bonds between polymer chains. The formation of this network structure can be indicated by the increase in the "MH -ML" differential, as discussed herein.

The terms "thermally treated," "thermally treating," "thermal treatment," and similar terms, as used herein, in reference to a composition comprising *components a* and *b* as described herein, refer to the application of heat to the composition. Heat may be applied by conduction (for example, a heating coil), by convection (for example, heat transfer through a fluid, such as water or air), and/or by radiation (for example, heat transfer using electromagnetic waves). Preferably heat is applied by conduction and/or convection. Note, the temperature at which the thermal treatment takes place, refers to the internal temperature of the device, such as an MDR device (or tunnel), used to cure (or crosslink) the composition. Typically, the composition readily equilibrates (less than 30 seconds) to the temperature of the device.

The terms "comprising," "including," "having," and their derivatives, are not intended to exclude the presence of any additional component, step or procedure, whether the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure, not specifically delineated or listed.

LISTING OF SOME COMPOSITION FEATURES

A] A composition comprising at least the following *components:*

a) at least one ethylene/alpha-olefin/non-conjugated polyene interpolymer comprising a Mooney Viscosity (ML 1+4, 125°C) from 10 to 40, and
b) at least one ethylene/alpha-olefin interpolymer comprising a melt viscosity (177°C) ≤ 50,000 mPa·s; and

wherein the composition has a Mooney Viscosity (ML 1+4, 100°C) from 6.0 to 10.

B] The composition of A] above, wherein the at least one interpolymer of *component a* has a Mooney Viscosity (ML1+4 at 125°C) ≥ 11, or ≥ 12, or ≥ 14, or ≥ 16, or ≥ 18, or ≥ 20 (Mooney units = MU).

C] The composition of A] or B] above, wherein the at least one interpolymer of *component a* has a Mooney Viscosity (ML1+4 at 125°C) ≤ 38, or ≤ 36, or ≤ 34, or ≤ 32, or ≤ 30.

D] The composition of any one of A]-C] (A] through C]) above, wherein the at least one interpolymer of *component a* has a density ≥ 0.850, or ≥ 0.852, or ≥ 0.854, or ≥ 0.856, or ≥ 0.858, or ≥ 0.859, or ≥ 0.860 g/cc, or ≥ 0.880, or ≥ 0.890, or ≥ 0.900, or ≥ 0.910, or ≥ 0.920, or ≥ 0.950 (1 cc = 1 cm$^3$).

E] The composition of any one of A]-D] above, wherein the at least one interpolymer of *component a* has a density ≤ 0.950, or ≤ 0.920, or ≤ 0.910, or ≤ 0.900, or ≤ 0.890, or ≤ 0.880, or ≤ 0.870, or ≤ 0.868, or ≤ 0.866, or ≤ 0.864, or ≤ 0.863, or ≤ 0.862, or ≤ 0.861 g/cc.

F] The composition of any one of A]-E] above, wherein the at least one interpolymer of *component a* comprises, in polymerized form, ≥ 4.5 wt%, or ≥ 4.6 wt%, or ≥ 4.7 wt%, or ≥ 4.8 wt%, or ≥ 4.9 wt%, or ≥ 5.0 wt%, and/or ≤ 9.0 wt%, or ≤ 8.9 wt%, or ≤ 8.8 wt%, or ≤ 8.7 wt%, or ≤ 8.6 wt%, or ≤ 8.5 wt% of the polyene, based on the weight of the interpolymer. Further, the polyene is a diene, and further ENB.

G] The composition of any one of A]-F] above, wherein the at least one interpolymer of *component a* comprises, in polymerized form, ≥ 45 wt%, or ≥ 46 wt%, or ≥ 47 wt%, or ≥ 48 wt%, or ≥ 49 wt%, or ≥ 50 wt% of C2 (ethylene), and/or ≤ 60 wt%, or ≤ 59 wt%, or ≤ 58 wt%, or ≤ 57 wt%, or ≤ 56 wt%, or ≤ 55 wt% of C2 (ethylene), based on the weight of the interpolymer.

H] The composition of any one of A]-G] above, wherein the at least one interpolymer of *component a* has a molecular weight distribution (MWD) ≥ 1.8, or ≥ 2.0, or ≥ 2.2, or ≥ 2.4, or ≥ 2.6, or ≥ 2.8, and/or ≤ 5.0, or ≤ 4.7, or ≤ 4.5, or ≤ 4.2, or ≤ 4.0, or ≤ 3.8, or ≤ 3.6, or ≤ 3.4, or ≤ 3.2, or ≤ 3.0.

I] The composition of any one of A]-H] above, wherein the at least one interpolymer of *component a* is an ethylene/alpha-olefin/non-conjugated diene interpolymer, or an ethylene/alpha-olefin/non-conjugated diene terpo-

7

lymer, or an EPDM.

J] The composition of any one of A]-I] above, wherein the alpha-olefin of the at least one interpolymer of *component a* is a C3-C20 alpha-olefin, or a C3-C10 alpha-olefin, or one of propylene, 1-butene, 1-hexene or 1-octene, or one of propylene, 1-butene, or 1-octene, or one of propylene or 1-octene, or propylene.

K] The composition of any one of A]-J] above, wherein the polyene of the at least one interpolymer of *component a* is a diene, and further ENB.

L] The composition of any one of A]-K] above, wherein *component a* comprises one or two ethylene/alpha-olefin/non-conjugated polyene interpolymer(s), or one or two ethylene/alpha-olefin/non-conjugated diene interpolymer(s), or one or two ethylene/alpha-olefin/non-conjugated diene terpolymer(s), or one or two EPDM(s).

M] The composition of any one of L] above, wherein *component a* comprises one ethylene/alpha-olefin/non-conjugated polyene interpolymer, or one ethylene/alpha-olefin/non-conjugated diene interpolymer, or one ethylene/alpha-olefin/non-conjugated diene terpolymer, or one EPDM.

N] The composition of any one of L] above, wherein *component a* comprises two ethylene/alpha-olefin/non-conjugated polyene interpolymers, or two ethylene/alpha-olefin/non-conjugated diene interpolymers, or two ethylene/alpha-olefin/non-conjugated diene terpolymers, or two EPDMs.

O] The composition of any one of A]-N] above, wherein the at least one interpolymer of *component b* has a melt viscosity (177°C) $\geq$ 5,000, or $\geq$ 5,500, or $\geq$ 6,000, or $\geq$ 6,200, or $\geq$ 6,400, or $\geq$ 6,600, or $\geq$ 6,800, or $\geq$ 7,000, or $\geq$ 7,200, or $\geq$ 7,400, or $\geq$ 7,600, or $\geq$ 7,800, or $\geq$ 8,000 mPa·s.

P] The composition of any one of A]-O] above, wherein the at least one interpolymer of *component b* has a melt viscosity (177°C) $\leq$ 45,000, or $\leq$ 40,000, or $\leq$ 35,000, or $\leq$ 30,000, or $\leq$ 28,000, or $\leq$ 26,000, or $\leq$ 24,000, or $\leq$ 22,000, or $\leq$ 20,000, or $\leq$ 18,000 mPa·s.

Q] The composition of any one of A]-P] above, wherein the at least one interpolymer of *component b* has a density $\geq$ 0.860, or $\geq$ 0.862, or $\geq$ 0.864, or $\geq$ 0.866, or $\geq$ 0.868, or $\geq$ 0.870 g/cc.

R] The composition of any one of A]-Q] above, wherein the at least one interpolymer of *component b* has a density $\leq$ 0.890, or $\leq$ 0.885, or $\leq$ 0.880, or $\leq$ 0.879, or $\leq$ 0.878, or $\leq$ 0.877, or $\leq$ 0.876, or $\leq$ 0.875 g/cc, or $\leq$ 0.874 g/cc.

S] The composition of any one of A]-R] above, wherein the at least one interpolymer of *component b* has a melt index (I2) $\geq$ 400, or $\geq$ 420, or $\geq$ 440, or $\geq$ 460, or $\geq$ 480, or $\geq$ 500 dg/min, and/or $\leq$ 1,500, or $\leq$ 1,450, or $\leq$ 1,400, or $\leq$ 1,350, or $\leq$ 1,300, or $\leq$ 1,250, or $\leq$ 1,200, or $\leq$ 1,150, or $\leq$ 1,100, or $\leq$ 1,050, or $\leq$ 1,000 dg/min.

T] The composition of any one of A]-S] above, wherein the at least one interpolymer of *component b* has a % crystallinity $\geq$ 10%, or $\geq$ 11%, or $\geq$ 12%, or 13%, or $\geq$ 14%, or $\geq$ 15%, or $\geq$ 16% and/or $\leq$ 25%, or $\leq$ 24%, or $\leq$ 23%, or $\leq$ 22%, or $\leq$ 21%, or $\leq$ 20%, or $\leq$ 19%, or $\leq$ 18%.

U] The composition of any one of A]-T] above, wherein the at least one interpolymer of *component b* has a melting point (Tm) $\geq$ 50°C, or $\geq$ 55°C, or $\geq$ 58°C, or $\geq$ 60°C, or $\geq$ 62°C, or $\geq$ 64°C, or $\geq$ 65°C, or $\geq$ 66°C, or $\geq$ 67°C, or $\geq$ 68°C and/or $\leq$ 85°C, or $\leq$ 82°C, or $\leq$ 80°C, or $\leq$ 78°C, or $\leq$ 76°C, or $\leq$ 74°C, or $\leq$ 73°C, or $\leq$ 72°C, or $\leq$ 71°C, or $\leq$ 70°C.

V] The composition of any one of A]-U] above, wherein the at least one interpolymer of *component b* has a glass transition temperature (Tg) $\geq$ -70°C, or $\geq$ -68°C, or $\geq$ -66°C, or $\geq$ -64°C, or $\geq$ -62°C, or $\geq$ -60°C, or $\geq$ -59°C, or $\geq$ -58°C and/or $\leq$ -40°C, or $\leq$ -42°C, or $\leq$ -44°C, or $\leq$ -46°C, or $\leq$ -48°C, or $\leq$ -50°C, or $\leq$ -52°C, or $\leq$ -54°C, or $\leq$ -55°C, or $\leq$ -56°C.

W] The composition of any one of A]-V] above, wherein the at least one interpolymer of *component b* has a molecular weight distribution (MWD) $\geq$ 1.7, or $\geq$ 1.8, or $\geq$ 1.9, or $\geq$ 2.0, or $\geq$ 2.1, or $\geq$ 2.2, or $\geq$ 2.3, and/or $\leq$ 3.5, or $\leq$ 3.2, or $\leq$ 3.0, or $\leq$ 2.8, or $\leq$ 2.7, or $\leq$ 2.6, or $\leq$ 2.5, or $\leq$ 2.4.

X] The composition of any one of A]-W] above, wherein the at least one interpolymer of *component b* has a number average molecular weight (Mn) $\geq$ 5,000, or $\geq$ 6,000, or $\geq$ 7,000, or $\geq$ 8,000, or $\geq$ 9,000, or $\geq$ 10,000, or $\geq$ 12,000, or $\geq$ 14,000, or $\geq$ 16,000, or $\geq$ 18,000, or $\geq$ 20,000 g/mol, and/or $\leq$ 30,000, or $\leq$ 28,000, or $\leq$ 26,000, or $\leq$ 24,000 g/mol.

Y] The composition of any one of A]-X] above, wherein the at least one interpolymer of *component b* has a weight average molecular weight (Mw) $\geq$ 15,000, or $\geq$ 17,000, or $\geq$ 20,000, or $\geq$ 22,000, or $\geq$ 25,000, or $\geq$ 27,000, or $\geq$ 30,000, or $\geq$ 32,000, or $\geq$ 35,000 g/mol, and/or $\leq$ 60,000, or $\leq$ 55,000, or $\leq$ 50,000, or $\leq$ 48,000, or $\leq$ 45,000, or $\leq$ 42,000, or $\leq$ 40,000 g/mol.

Z] The composition of any one of A]-Y] above, wherein the at least one interpolymer of *component b* is an ethylene/alpha-olefin copolymer.

A2] The composition of any one of A]-Z] above, wherein the alpha-olefin of the at least one interpolymer of *component b* is a C3-C20 alpha-olefin, or a C3-C10 alpha-olefin, or one of propylene, 1-butene, 1-hexene or 1-octene, or one of propylene, 1-butene, or 1-octene, or one of 1-butene or 1-octene, or 1-octene.

B2] The composition of any one of A]-A2] above, wherein *component b* comprises one or two ethylene/alpha-olefin interpolymer(s), or one or two ethylene/alpha-olefin copolymer(s).

C2] The composition of any one of B2] above, wherein *component b* comprises one ethylene/alpha-olefin interpolymer, or one ethylene/alpha-olefin copolymer.

D2] The composition of any one of B2] above, wherein *component b* comprises two ethylene/alpha-olefin interpolymers, or two ethylene/alpha-olefin copolymers.

E2] The composition of any one of A]-D2] above, wherein the composition has a Mooney Viscosity (ML1+4 at 100°C) ≥ 6.2, or ≥ 6.4, or ≥ 6.6, or ≥ 6.8, or ≥ 7.0, or ≥ 7.1, or ≥ 7.2, or ≥ 7.3.

F2] The composition of any one of A]-E2] above, wherein the composition has a Mooney Viscosity (ML1+4 at 100°C) ≤ 9.5, or ≤ 9.0, or ≤ 8.7, or ≤ 8.5, or ≤ 8.2, or ≤ 8.0, or ≤ 7.5.

G2] The composition of any one of A]-F2] above, wherein the ratio of the density of the at least one interpolymer of *component a* to the density of the at least one interpolymer of *component b* is ≥ 0.970, or ≥ 0.972, or ≥ 0.974, or ≥ 0.976, or ≥ 0.978, or ≥ 0.980, or ≥ 0.982, or ≥ 0.983, or ≥ 0.984, and/or ≤ 1.00, or ≤ 0.998, or ≤ 0.996, or ≤ 0.994, or ≤ 0.992, or ≤ 0.991, or ≤ 0.990, or ≤ 0.989.

H2] The composition of any one of A]-G2] above, wherein the weight ratio of *component a* to *component b* is ≥ 1.5, or ≥ 1.6, or ≥ 1.7, or ≥ 1.8, or ≥ 1.9, or ≥ 2.0, or ≥ 2.1, or ≥ 2.2, or ≥ 2.3, and/or ≤ 20, or ≤ 15, or ≤ 12, or ≤ 10, or ≤ 9.5, or ≤ 9.0, or ≤ 8.5, or ≤ 8.0, or ≤ 7.5, or ≤ 7.0, or ≤ 6.5, or ≤ 6.0, or ≤ 5.5, or ≤ 5.0, or ≤ 4.8, or ≤ 4.6, or ≤ 4.4, or ≤ 4.2, or ≤ 4.1, or ≤ 4.0.

I2] The composition of any one of A]-H2] above, wherein the composition comprises ≥ 20 wt%, or ≥ 22 wt%, or ≥ 24 wt%, or ≥ 26 wt%, or ≥ 28 wt%, or ≥ 30 wt%, or ≥ 32 wt%, or ≥ 34 wt%, and/or ≤ 50 wt%, or ≤ 48 wt%, or ≤ 46 wt%, or ≤ 44 wt%, or ≤ 42 wt%, or ≤ 40 wt%, or ≤ 38 wt%, or ≤ 36 wt%, of the sum of *components a* and b, based on the weight of the composition.

J2] The composition of any one of A]-I2] above, wherein the composition comprises ≥ 15 wt%, or ≥ 17 wt%, or ≥ 19 wt%, or ≥ 20 wt%, or ≥ 21 wt%, or ≥ 22 wt%, or ≥ 23 wt%, or ≥ 24 wt%, and/or ≤ 40 wt%, or ≤ 38 wt%, or ≤ 36 wt%, or ≤ 35 wt%, or 34 wt%, ≤ 33 wt%, or ≤ 32 wt%, or ≤ 31 wt%, or 30 wt% of *component a* based on the weight of the composition.

K2] The composition of any one of A]-J2] above, wherein the composition comprises ≥ 2.0 wt%, or ≥ 2.2 wt%, or ≥ 2.4 wt%, or ≥ 2.6 wt%, or ≥ 2.8 wt%, or ≥ 3.0 wt%, or ≥ 3.1 wt%, or ≥ 3.2 wt%, or ≥ 3.3 wt%, or ≥ 3.4 wt%, or ≥ 3.5 wt%, and/or ≤ 20 wt%, or ≤ 18 wt%, or 16 wt%, ≤ 14 wt%, or ≤ 13 wt%, or ≤ 12 wt%, or 11 wt% of *component b* based on the weight of the composition.

L2] The composition of any one of A]-K2] above, wherein the composition further comprises an oil *(component c).*

M2] The composition of L2] above, wherein the composition comprises ≥ 6.0 wt%, or ≥ 8.0 wt%, or ≥ 10 wt%, or ≥ 12 wt%, or ≥ 14 wt%, or ≥ 16 wt%, or ≥ 17 wt%, and/or ≤ 40 wt%, or ≤ 38 wt%, or ≤ 35 wt%, or ≤ 32 wt%, or 30 wt%, ≤ 28 wt%, or ≤ 26 wt%, or ≤ 24 wt%, or ≤ 22 wt%, or ≤ 20 wt% of *component* c based on the weight of the composition.

N2] The composition of L2] or M2] above, wherein the weight ratio of *component c* to *component c* is ≥ 0.8, or ≥ 0.9, or ≥ 1.0, or ≥ 1.1, or ≥ 1.2, or ≥ 1.3, or ≥ 1.4 and/or ≤ 3.0, or ≤ 2.8, or ≤ 2.6, or ≤ 2.5, or ≤ 2.4, or ≤ 2.3, or ≤ 2.2, or ≤ 2.1, or ≤ 2.0, or ≤ 1.9, or ≤ 1.8.

O2] The composition of any one of A]-N2] above, wherein the composition further comprises one or more fillers *(component d).*

P2] The composition of O2] above, wherein the composition comprises two fillers *(component d),* and wherein the amount of the first filler ≥ amount of the second filler, and further, each filler is a type of carbon black.

Q2] The composition of P2] above, wherein the weight ratio of the first filler to the second filler is ≥ 1.0, or ≥ 1.1, or ≥ 1.2, and/or ≤ 3.0, or ≤ 2.7, or ≤ 2.5, or ≤ 2.0, or ≤ 1.8, or ≤ 1.6, or ≤ 1.5, or ≤ 1.4, or ≤ 1.3.

R2] The composition of any one of O2]-Q2] above, wherein the composition comprises ≥ 6.0 wt%, or ≥ 8.0 wt%, or ≥ 10 wt%, or ≥ 12 wt%, or ≥ 14 wt%, or ≥ 16 wt%, or ≥ 18 wt%, and/or ≤ 40 wt%, or ≤ 38 wt%, or ≤ 35 wt%, or ≤ 32 wt%, or 30 wt%, ≤ 28 wt%, or ≤ 26 wt%, or ≤ 24 wt%, or ≤ 22 wt%, or ≤ 20 wt% of *component d* based on the weight of the composition.

S2] The composition of any one of O2]-R2] above, wherein the weight ratio of *component a* to *component d is* ≥ 0.8, or ≥ 0.9, or ≥ 1.0, or ≥ 1.1, or ≥ 1.2, and/or ≤ 3.0, or ≤ 2.8, or ≤ 2.6, or ≤ 2.4, or ≤ 2.2, or ≤ 2.0, or ≤ 1.9, or ≤ 1.8, or ≤ 1.7.

T2] The composition of any one of A]-S2] above, wherein the composition further comprises at least one crosslinking agent, or at least two crosslinking agents.

U2] The composition of T2] above, wherein the at least one crosslinking agent, and further at least two crosslinking agents, is/are selected from a sulfur, MBT, CBS, DPTT, ZDEC or any combination thereof.

V2] The composition of T2] or U2] above, wherein the composition comprises ≥ 0.04 phr, or ≥ 0.06 phr, or ≥ 0.08 phr, or ≥ 0.10 phr, or ≥ 0.20 phr, or ≥ 0.50 phr, or ≥ 1.0 phr and/or ≤ 5.0 phr, or ≤ 4.5 phr, or ≤ 4.0 phr, or ≤ 3.7 phr, or ≤ 3.0 phr, or ≤ 2.5 phr, or ≤ 2.0 phr of the at least one crosslinking agent, and further at least two crosslinking agents, based on one hundred parts of *components a* and b.

W2] The composition of any one of A]-V2] above, wherein the composition further comprises a blowing agent.

X2] The composition of W2] above, wherein the blowing agent is selected from ADC, and/or OBSH.

Y2] The composition of W2] or X2] above, wherein the composition comprises ≥ 0.50 phr, or ≥ 1.0 phr, or ≥ 1.5 phr, or ≥ 2.0 phr, or ≥ 3.0 phr, or ≥ 4.0 phr, or ≥ 4.5 phr and/or ≤ 10 phr, or ≤ 9.0 phr, or ≤ 8.0 phr, or ≤ 7.0 phr, or ≤ 6.0 phr, or ≤ 5.5 phr of the blowing agent, based on one hundred parts of *components a* and b.

Z2] The composition of any one of A]-Y2] above, wherein the composition, upon thermal treatment at a temperature of 180°C, has a "tc90" value ≥ 0.80, or ≥ 0.90, or ≥ 1.00, or ≥ 1.10, or ≥ 1.20, or ≥ 1.30, or ≥ 1.40, or ≥ 1.50, or ≥ 1.60, or ≥ 1.70, or ≥ 1.80 minutes, and/or ≤ 3.00, or ≤ 2.80, or ≤ 2.60, or ≤ 2.40, or ≤ 2.20, or ≤ 2.00, or ≤ 1.90, or ≤ 1.85 minutes. The tc90 value is determined by MDR as described herein.

A3] The composition of any one of A]-Z2] above, wherein the composition, upon thermal treatment at a temperature of 180°C, has a [(MH-ML)/ tc90 ] value ≥ 2.00, or ≥ 2.10, or ≥ 2.20, or ≥ 2.30, or ≥ 2.40, or ≥ 2.50, or ≥ 2.60, or ≥ 2.80, or ≥ 3.00, or ≥ 3.50 dN*m/min, and/or ≤ 5.00, or ≤ 4.50, or ≤ 4.00, or ≤ 3.50 dN*m/min. The MH, ML and the tc90 values are determined by MDR as described herein.

B3] The composition of any one of A]-A3] above, wherein the composition, upon thermal treatment at a temperature of 180°C, has a "ts2" value ≥ 0.90, or ≥ 0.95, or ≥ 1.00 minutes, and/or ≤ 1.50, or ≤ 1.45, or ≤ 1.40, or ≤ 1.35, or ≤ 1.30, or ≤ 1.25, or ≤ 1.20, or ≤ 1.18, or ≤ 1.15 minutes. The ts2 value is determined by MDR as described herein.

C3] The composition of any one of A]-B3] above, wherein the composition, after thermal treatment at a temperature of 180°C, for a time from 1.0 to 2.0 minutes, has a foam density ≥ 0.64, or ≥ 0.65, or ≥ 0.66 g/cc to ≤ 0.74, or ≤ 0.72, or ≤ 0.70, or ≤ 0.68 g/cc.

D3] The composition of any one of A]-C3] above, wherein the composition further comprises a thermoplastic polymer, different from *component a* in one or more features, such as monomer(s) types, monomer amounts, density, Mooney Viscosity (ML 1+4, 125°C), or any combination thereof; and where the thermoplastic polymer is different from *component b* in one or more features, such as monomer(s) types, monomer amounts, density, melt viscosity (177°C), percent crystallinity, or any combination thereof.

E3] A crosslinked composition formed from the composition of any one of A]-D3] above.

F3] An article comprising at least one component formed from the composition of any one of A]-E3] above.

G3] The article of F3] above, wherein the article is an injected molded article, a transfer molded article, an extruded article, a thermoformed article, or a compression molded article, and further an injected molded article, a transfer molded article, or a compression molded article, and further an injection molded article.

H3] The article of F3] or G3] above, wherein the article is selected from an automotive part, a building material, a roofing membrane, a wire or cable jacket, a flooring material, a computer part, a gasket, or a tire.

I3] The article of F3] or G3] above, wherein the article is a window profile.

J3] A process to form a crosslinked composition, said process comprising thermally treating the composition of any one of A]-D3] above.

K3] The process of J3] above, wherein the composition is thermally treated at a temperature ≥ 100°C, or ≥ 110°C, or ≥ 120°C, or ≥ 130°C, or ≥ 140°C, or ≥ 150°C, or ≥ 160°C, or ≥ 170°C, or ≥ 175°C, or ≥ 178°C, or ≥ 180°C.

L3] The process of J3] or K3] above, wherein the composition is thermally treated at a temperature ≤ 220°C, or ≤ 210°C, or ≤ 205°C, or ≤ 200°C, or ≤ 195°C, or ≤ 190°C, or ≤ 187°C, or ≤ 185°C.

L4] The composition of any one of A]-L3] above, wherein *component a* comprises at least two interpolymers. Said another way, wherein *component a* comprises of a first interpolymer and a second interpolymer.

L5] The composition of any one of A]-C3] above, wherein *component a* comprises at least one interpolymer with a density from 0.856 to 0.864 g/cc and at least one interpolymer of with a density from 0.865 to 0.910 g/cc.

L6] The composition of any one of A]-C3] above, wherein *component a* comprises at least one interpolymer with a Mooney Viscosity (ML 1+4 at 125°C) from 30 to 35 MU and at least one interpolymer of with a Mooney Viscosity (ML 1+4 at 125°C) from 15 to 20 MU.

L7] The composition of any one of A]-L3] above, wherein *component a* comprises of at least a first interpolymer with a density from 0.856 to 0.864 g/cc and a second interpolymer with a density from 0.865 to 0.910 g/cc.

L8] The composition of any of any one of A]-L3] above, wherein *component a* comprises of at least a first interpolymer with a Mooney Viscosity (ML 1+4 at 125°C) from 30 to 35 MU and a second interpolymer of with a Mooney Viscosity (ML 1+4 at 125°C) from 15 to 20 MU.

TEST METHODS

**Moving Die Rheometer (MDR)**

The cure properties of a composition was measured at 180°C and with a 0.5 deg arc, using an Alpha Moving Die Rheometer (MDR-2000) following ASTM D5289-19. Sample size 25 ± 2 grams. In this method, the ML (dNm) value refers to the Minimum Torque recorded by the rheometer, and it is a measure of the stiffness and viscosity of the composition at a given temperature. The lower the ML value, the better the composition flow before being fully crosslinked.

The MH (dNm) value refers to the Maximum Torque recorded by the rheometer, and is a measure of the crosslinking density of the crosslinked composition. An increased MH value indicates there is an increased in the crosslinking density. The higher the crosslink density, the better the rate of cure within a mold, for example a mold used in an injection molding process.

The MH-ML (dNm) differential refer to the is the torque difference recorded by the rheometer. This torque differential indicated the amount of crosslinking that occurred during the test, and this differential is related to the shear modulus of the composition. Higher the torque differential, the higher the crosslink density, and the higher the elastic recoverability of the crosslinked composition. A high elastic recoverability can help to improve regain properties of an injection molded part.

The tc90 value represents the curing time to reach 90% cure (or 90% of the "MH - ML" value). It is the time required for the cured rubber to reach 90% of the maximum accomplishable torque differential. So, the shorter tc90 value is preferable, especially for an injection molding process, since a shorter time helps to reduce the curing cycle time, and provides better productivity of the injection molded part. Note, the tc50 value represents the time to reach 50% cure (or 50% of the "MH - ML" value).

The ts2 value refers to the scorch time or the point at which the curing actually starts. In a composition, a higher ts2 value leads to a rough surface, because of a delayed curing action. However, if the ts2 value is too short, then there is a chance of composition scorch before the composition completely flows into the mold.

Overall, the best compositions have the following characteristics: lower ML value, for better composition flow, higher MH and MH-ML values for better crosslink density, lower tc90 value (for example, 1.4-1.9 minutes) for optimum cure rate and lower product cure time, and lower ts2 value (for example, 1.0-1.5 minutes) for reduced potential to scorch.

**Mooney Viscosity of Polymer (No oil, no filler)**

Mooney Viscosity (ML 1+4 at 125°C) of each EPDM (neat form) is measured in accordance with ASTM D1646, with a one minute preheat time and a "four minute" rotor operation time. The instrument is an Alpha Technologies MV2000E Viscometer. Sample size around 25 grams.

**Mooney Viscosity of Composition**

Mooney Viscosity (ML 1+4 at 100°C) of each composition was measured with an Alpha Technologies MV2000E Viscometer, according to ASTM D1646, at 100°C (large rotor). The preheating time was one minute, and the rotor operation time was four minutes. The Mooney Viscosity of each formulated composition was measured using an uncured blanket or sheet (see experimental section) of about 25 grams.

**Polymer Density**

Polymer density is measured in accordance with ASTM D297.

**Melt Index**

The melt index (I2) of an ethylene-based polymer is measured in accordance with ASTM D-1238, condition 190°C/2.16 kg. The melt flow rate (MFR) of a propylene-based polymer is measured in accordance with ASTM D-1238, condition 230°C/2.16 kg.

**FTIR Method for EPDM Composition Analysis**

The EPDM terpolymers containing ethylene, propylene, and 5-ethylidene-2-norbornene were analyzed, using ASTM D3900 for ethylene content, and ASTM D6047 for ethylidene-norbornene (ENB) content. Similar analyses can be used to measure the monomer content (for example, C2, alpha-olefin or diene) of other interpolymers and terpolymers.

**Melt Viscosity**

Melt viscosity was measured in accordance with ASTM D1084, using a Brookfield Viscometer (Model DV0III, version 3), and a SC-31 hot-melt viscometer spindle, at a temperature of 177°C (350°F). Sample size about 8-10 grams of pellets.

**Differential Scanning Calorimetry (DSC)**

Differential Scanning Calorimetry (DSC) is used to measure Tm, Tc, Tg and crystallinity in ethylene-based (PE) and propylene-based (PP) polymer samples. Each sample (0.5 g) is compression molded into a film, at 25000 psi, 190°C, for 10-15 seconds. About 5 to 8 mg of film sample is weighed and placed in a DSC pan. The lid is crimped on the pan to ensure a closed atmosphere. The sample pan is placed in a DSC cell, and then heated, at a rate of approximately 10°C/min, to a temperature of 180°C for PE (230°C for PP). The sample is kept at this temperature for three minutes. Then the sample is cooled at a rate of 10°C/min to -90°C for PE (-60°C for PP), and kept isothermally at that temperature for three minutes. The sample is next heated at a rate of 10°C/min, until complete melting (second heat). Unless otherwise stated, the melting point (Tm) and the glass transition temperature (Tg) of each polymer sample are determined from the second heat curve, and the crystallization temperature (Tc) is determined from the first cooling curve. The Tg and the respective peak temperatures for the Tm and the Tc are noted. The percent crystallinity can be calculated by dividing the heat of fusion (Hf), determined from the second heat curve, by a theoretical heat of fusion of 292 J/g for PE (165 J/g for PP), and multiplying this quantity by 100 (for example, % cryst. = (Hf / 292 J/g) x 100 (for PE)).

## Gel Permeation Chromatography

The chromatographic system consists of a PolymerChar GPC-IR (Valencia, Spain) high temperature GPC chromatograph, equipped with an internal IR5 infra-red detector (IR5). The autosampler oven compartment is set at 160° Celsius, and the column compartment is set at 150° Celsius. The columns are four AGILENT "Mixed A" 30 cm, 20-micron linear mixed-bed columns. The chromatographic solvent is 1,2,4-trichlorobenzene, which contains 200 ppm of butylated hydroxytoluene (BHT). The solvent source is nitrogen sparged. The injection volume is 200 microliters, and the flow rate is 1.0 milliliters/minute.

Calibration of the GPC column set is performed with 21 narrow molecular weight distribution polystyrene standards, with molecular weights ranging from 580 to 8,400,000, and which are arranged in six "cocktail" mixtures, with at least a decade of separation between individual molecular weights. The standards are purchased from Agilent Technologies. The polystyrene standards are prepared at "0.025 grams in 50 milliliters" of solvent, for molecular weights equal to, or greater than, 1,000,000, and at "0.05 grams in 50 milliliters" of solvent, for molecular weights less than 1,000,000. The polystyrene standards are dissolved at 80 degrees Celsius, with gentle agitation, for 30 minutes. The polystyrene standard peak molecular weights are converted to polyethylene molecular weights using Equation 1 (as described in Williams and Ward, J. Polym. Sci., Polym. Let., 6, 621 (1968)):

$$M_{polyethylene} = A \times \left( M_{polystyrene} \right)^{B} \quad \text{(EQ1)},$$

where M is the molecular weight, A has a value of 0.4315 and B is equal to 1.0.

A fifth order polynomial is used to fit the respective polyethylene-equivalent calibration points. A small adjustment to A (from approximately 0.375 to 0.445) is made to correct for column resolution and band-broadening effects, such that linear homopolymer polyethylene standard is obtained at 120,000 Mw.

The total plate count of the GPC column set is performed with decane (prepared at "0.04 g in 50 milliliters" of TCB, and dissolved for 20 minutes with gentle agitation.) The plate count (Equation 2) and symmetry (Equation 3) are measured on a 200 microliter injection according to the following equations:

$$Plate\ Count = 5.54 * \left( \frac{(RV_{Peak\ Max}}{Peak\ Width\ at\ \frac{1}{2}height} \right)^{2} \quad \text{(EQ2)},$$

where RV is the retention volume in milliliters, the peak width is in milliliters, the peak max is the maximum height of the peak, and ½ height is ½ height of the peak maximum; and

$$Symmetry = \frac{(Rear\ Peak\ RV_{one\ tenth\ height} - RV_{Peak\ max})}{(RV_{Peak\ max} - Front\ Peak\ RV_{one\ tenth\ height})} \quad \text{(EQ3)},$$

where RV is the retention volume in milliliters, and the peak width is in milliliters, Peak max is the maximum position of the peak, one tenth height is 1/10 height of the peak maximum, and where rear peak refers to the peak tail at later retention volumes than the peak max, and where front peak refers to the peak front at earlier retention volumes than the peak max. The plate count for the chromatographic system should be greater than 18,000, and symmetry should be between 0.98 and 1.22.

Samples are prepared in a semi-automatic manner with the PolymerChar "Instrument Control" Software, wherein the samples are weight-targeted at 2 mg/ml, and the solvent (contained 200 ppm BHT) is added to a pre nitrogen-sparged, septa-capped vial, via the PolymerChar high temperature autosampler. The samples are dissolved for two hours at 160° Celsius under "low speed" shaking.

The calculations of Mn(GPC), Mw(GPC), and Mz(GPC) are based on GPC results using the internal IR5 detector (measurement channel) of the PolymerChar GPC-IR chromatograph according to Equations 4-6, using PolymerChar GPCOne™ software, the baseline-subtracted IR chromatogram at each equally-spaced data collection point (i), and the polyethylene equivalent molecular weight obtained from the narrow standard calibration curve for the point (i) from Equation 1. Equations 4-6 are as follows:

$$Mn_{(GPC)} = \frac{\sum^{i} IR_i}{\sum^{i}\left( IR_i \middle/ M_{polyethylene_i} \right)} \quad \text{(EQ 4)},$$

$$Mw_{(GPC)} = \frac{\sum^{i}\left( IR_i * M_{polyethylene_i} \right)}{\sum^{i} IR_i} \quad \text{(EQ 5)},$$

and

$$Mz_{(GPC)} = \frac{\sum^{i}\left( IR_i * M_{polyethylene_i}{}^{2} \right)}{\sum^{i}\left( IR_i * M_{polyethylene_i} \right)} \quad \text{(EQ 6)}.$$

In order to monitor the deviations over time, a flowrate marker (decane) is introduced into each sample, via a micropump controlled with the PolymerChar GPC-IR system. This flowrate marker (FM) is used to linearly correct the pump flowrate (Flowrate(nominal)) for each sample, by RV alignment of the respective decane peak within the sample (RV(FM Sample)), to that of the decane peak within the narrow standards calibration (RV(FM Calibrated)). Any changes in the time of the decane marker peak are then assumed to be related to a linear-shift in flowrate (Flowrate(effective)) for the entire run. To facilitate the highest accuracy of a RV measurement of the flow marker peak, a least-squares fitting routine is used to fit the peak of the flow marker concentration chromatogram to a quadratic equation. The first derivative of the quadratic equation is then used to solve for the true peak position. After calibrating the system, based on a flow marker peak, the effective flowrate (with respect to the narrow standards calibration) is calculated as Equation 7:

$$\text{Flowrate(effective)} = \text{Flowrate(nominal)} * (RV(FM\ Calibrated) / RV(FM\ Sample))\ (EQ7).$$

Processing of the flow marker peak is done via the PolymerChar GPCOne™ Software. Acceptable flowrate correction is such that the effective flowrate is within +/-0.7% of the nominal flowrate.

EXPERIMENTAL

Commercial Polymers are shown in Tables 1 and 2. Additives are listed below these tables.

Table 1: Polymer (Ethylene/octene Copolymer) Properties

| Physical | AFFINITY GA 1900 | AFFINITY™ GA 1950 |
|---|---|---|
| Total Crystallinity, % DSC | 16 | 18 |
| Tm (°C) DSC | 68 | 70 |
| Tg (°C) DSC | -58 | -56 |
| Density, g/cc (ASTM D792) | 0.870 | 0.874 |
| Melt Index*, g/10 min (2.16 kg @ 190°C) | 950-1000 (estimated) | 490-500 (estimated) |
| Melt (Brookfield) Viscosity, 350°F (177°C), mPa·s (ASTM D1084) | 8200 | 17000 |
| * Note, the equation "Melt Index = [3.6126($10^{(log(\eta)-6928)/-1.1363}$) - 9.3185], where $\eta$ (cP or mPa·s) = melt viscosity at 350°F (177°C)" can be used to calculate a melt index (2.16 kg, 190°C) for the AFFINITY Grades 1900 and 1950. Melt Index = 12. See U.S. Patent 7,199,180, footnote to Table 1. | | |

Table 2: Polymer (EPDM) Properties

| Physical | NORDEL 6530 XFC | NORDEL IP 4520 | NORDEL IP 4820 | Commercial EPDM* |
|---|---|---|---|---|
| Ethylene, wt% (ASTM D3900) | 55.0 | 50.0 | 85 | 52 - 53 (estimation) |
| ENB, wt% (ASTM D6047) | 8.5 | 5.0 | 4.9 | 8-9 (estimation) |
| Mooney Viscosity (ML 1+4 at 125°C) (ASTM D1646) | 30 MU | 20 MU | 20 | 8-10 MU** (estimation) |
| Density, g/cc (ASTM D297) | 0.860 | 0.860 | 0.91 | Estimated around 0.860 |

Note wt% propylene = 100% - (wt% ethylene + wt% ENB).
* Lowest Mooney Viscosity (100°C) EPDM grade presently on the market, as of the filing date of this application.
** Mooney measured at 100°C.

Paraffinic oil, for example from GP Petroleum.

Carbon Black N-550 available from Cabot.

Carbon Black N-774 available from Cabot.

Calcium carbonate ($CaCO_3$) filler available from Omya.

PEG 4000 - Process aid (Polyethylene Glycol), available from Sinoreagent in China.

2-Mercaptobenzothiazole (RHENOGRAN MBT-80) - Curative available from Rhein Chemie.

RHENOGRAN S-80 - Curative, available from Rhein Chemie.

RHENOGRAN ZDEC-80 - Cure Accelerator, available from Rhein Chemie.

Stearic acid - Cure Activator and process aid, available from Loxiol.

ZnO-Powder - Cure Activator, available from Silox.

Kezadol GR- CaO granule - Desiccant, available from Kettlitz.

CBS-powder - Delayed Action Accelerator, available from Lanxess Rubber Chemicals.

RHENOGRAN DPTT-75 - Cure Accelerator ,available from Rhein Chemie.

MIKROFINE - ADC Powder- available from HPL Additives. Azodicarbonamide.

**Sample Preparation**

Inventive and comparative compositions are listed in Table 3 below.

Table 3: Inventive and Comparative Compositions

| | Inv. 1. NORDEL 6530 XFC + AFFINITY GA 1900 | Inv. 2 NORDEL IP 4520 + AFFINITY GA 1900 | Comp. A NORDEL 6530 XFC + AFFINITY GA 1950 | Comp. B NORDEL 6530 XFC | Comp. C NORDEL IP 4520 | Comp. D. Comm EPD M | Inv. 3 NORDEL 6530 XFC + NORDEL IP 4520 + AFFINITY GA 1900 | Inv. 4 NORDEL 6530 XFC + NORDEL IP 4820 + AFFINITY GA 1900 |
|---|---|---|---|---|---|---|---|---|
| NORDEL 6530 | 70 | 0 | 70 | 100 | 0 | 0 | 50 | 55 |
| NORDEL 4520 | 0 | 80 | 0 | 0 | 100 | 0 | 40 | 0 |
| NORDEL 4820 | 0 | 0 | 0 | 0 | 0 | 0 | 0 | 10 |
| AFFINITY GA 1900 | 30 | 20 | 0 | 0 | 0 | 0 | 10 | 35 |
| AFFINITY GA 1950 | 0 | 0 | 30 | 0 | 0 | 0 | 0 | 0 |
| Mitsui EPT X4010M | 0 | 0 | 0 | 0 | 0 | 100 | 0 | 0 |
| CB N550 | 30 | 30 | 30 | 30 | 30 | 30 | 30 | 30 |
| CB N774 | 25 | 25 | 25 | 25 | 25 | 25 | 25 | 25 |
| White Filler CaCO$_3$ | 60 | 60 | 60 | 60 | 60 | 60 | 60 | 60 |
| Paraffinic oil | 51 | 51 | 51 | 51 | 51 | 51 | 51 | 51 |
| ZnO | 7.5 | 7.5 | 7.5 | 7.5 | 7.5 | 7.5 | 7.5 | 7.5 |
| Stearic Acid | 1 | 1 | 1 | 1 | 1 | 1 | 1 | 1 |
| PEG 4000 | 2.5 | 2.5 | 2.5 | 2.5 | 2.5 | 2.5 | 2.5 | 2.5 |
| MBT-80 | 0.9 | 0.9 | 0.9 | 0.9 | 0.9 | 0.9 | 0.9 | 0.9 |
| S-80 | 1.1 | 1.1 | 1.1 | 1.1 | 1.1 | 1.1 | 1.1 | 1.1 |
| CBS | 0.4 | 0.4 | 0.4 | 0.4 | 0.4 | 0.4 | 0.4 | 0.4 |
| DPTT-75 | 0.7 | 0.7 | 0.7 | 0.7 | 0.7 | 0.7 | 0.7 | 0.7 |
| ZDEC-80 | 0.5 | 0.5 | 0.5 | 0.5 | 0.5 | 0.5 | 0.5 | 0.5 |
| CaO | 3 | 3 | 3 | 3 | 3 | 3 | 3 | 3 |
| ADC | 5 | 5 | 5 | 5 | 5 | 5 | 5 | 5 |
| weight parts | 288.6 | 288.6 | 288.6 | 288.6 | 288.6 | 288.6 | 288.6 | 288.6 |

*Preparation of Composition - Representative Procedure*

A step by step mixing procedure was used to mix each composition as shown in Table 3 above. The initial mixing temperature was 50°C. For inventive composition 1 (Inv. 1), the NORDEL 6530 XFC EPDM was masticated for 30 seconds, and next the AFFINITY GA 1900 was added, and the resulting mixture was masticated for another 30 seconds (Bainite mixer, 1.6 liter internal mixer). The fill factor was 0.75 (Bainite mixing chamber). Then stearic acid, ZnO, the oil (1/2 total amount), carbon black (2/3 the total amount), and the white filler were added, and the resulting mixture was mixed at 50 RPM for 60 seconds (in the Bainite mixer). Next, the PEG and the remaining oil and carbon black were added, and the mixture was mixed for another 80 seconds at 50 RPM. The mixing device was then rammed up, swiped and cleaned, and the fillers on the ram were added back into the mixer chamber (1.6 liter). Mixing continued, until the mixture reached a temperature of 120°C. The mixture was dumped onto a tray, and mixing was continued on a 6 inch, temperature controlled, two-roll mill (Bharaj Machinery). A "0.5 inch thick" blanket was sheeted out, and kept at room temperature for 12 hours, to improve the polymer filler interaction (networking). All the remaining additives, including the blowing agent and the CaO, were thoroughly mixed into the blanket on the temperature controlled, two roll mill, and a "0.5 inch thick" blanket was sheeted out. After one hour at room temperature, the rheology and other properties of the uncured composition (blanket or sheet) were measured. Results are shown in Table 4 below.

**Results**

Optimal cure properties for the injection molding of complex parts, for example complex profiles, are as follows: a) low tc90 values for a fast cure rate and reduced product cure time, b) high MH and "MH-ML" values for a higher crosslinking density, c) low ML values for better composition flow within a mold, and d) fairly low ts2 values to reduce the potential for scorching. In regard to the composition viscosity, lower Mooney values are preferred to ensure the complete filling of the mold. To reduce variation in the test results, for each composition, only the polymer variation was changed, and the amount of each additive was kept constant, as seen in Table 3. Inventive compositions 1-4 result in better complex profiles, as compared to the comparative compositions.

The comparative compositions A-C had Mooney values of 11MU, 15 MU and 13MU, respectively. Such high Mooney values lead to poor processability and short mold filled (that is, a low flow of the composition inside the mold). Inventive compositions 1-4, and comparative composition D, with a Mooney values of 7.3MU, 8.0 MU, 7.3 MU, 7.2 MU and 8-10 MU, respectively, are able to fill a complex mold. The comparative compositions also had higher ML values as compared to the inventive compositions, indicating a poorer composition flow within a mold.

Inventive compositions 1-4 had significantly lower tc90 values (1.74 min, 1.85 min, 1.80 min, 1.87 min) as compared to comparative composition D (2.12 min), which indicates that the inventive compositions had faster cure rates than the comparative composition. Inventive compositions 1-4 also had higher MH values (5.80 Nm, 5.20 Nm, 5.95 nm, 6.88 nm) and higher "MH-ML" values (5.55 Nm, 4.82 Nm, 5.65 Nm, 6.73), as compared to comparative composition D (MH = 4.36 Nm, "MH-ML" = 3.86 Nm). These results indicate a higher degree of crosslinking in the inventive compositions, which, in turn, provide for parts having better mechanical strength and properties. As discussed above, the inventive compositions also had lower ML values for better composition flow within a mold.

For inventive compositions 1 and 3, the scorch times (ts2), at 180°C, were 1.14 minutes and 1.18 minutes, respectively, and the tc90 times were 1.74 minutes and 1.80 minutes, respectively. The shorter tc90 and ts2 values of these compositions indicate a high curing rate at 180°C (or higher temperatures), and a lower potential for scorching, and thus a better surface finish on the injection molded part.

Compositions have been discovered that provide optimum viscosity and cure properties for complex injection molding parts. As noted from the viscosity and cure data, the inventive compositions provide for a fast flow rate and a fast curing rate, for complex injection molded parts of good quality and strength, and increased productivity.

Table 4: Viscosity and Cure Properties

| | | | Inv. 1 | Inv. 2 | Comp. A | Comp. B | Comp. C | Comp. D | Inv. 3 | Inv. 4 |
|---|---|---|---|---|---|---|---|---|---|---|
| MDR | ML | Nm | 0.25 | 0.38 | 0.55 | 0.68 | 0.62 | 0.50 | 0.30 | 0.15 |
| | MH | Nm | 5.80 | 5.20 | 6.20 | 7.20 | 6.40 | 4.36 | 5.95 | 6.88 |
| | MH-ML | Nm | 5.55 | 4.82 | 5.65 | 6.52 | 5.78 | 3.86 | 5.65 | 6.73 |
| | ts2 | min | 1.14 | 1.44 | 1.38 | 1.10 | 1.13 | 1.55 | 1.18 | 1.60 |
| | tc50 | min | 1.18 | 1.44 | - | 1.22 | 1.30 | 1.40 | 1.25 | 1.22 |
| | tc90 | min | 1.74 | 1.85 | 1.88 | 1.63 | 1.71 | 2.12 | 1.80 | 1.87 |
| [(MH - ML)/(tc90)] | | Nm/min | 3.19 | 2.61 | 3.01 | 4.00 | 3.38 | 1.82 | 3.13 | 3.59 |
| Composition Mooney | ML(1+4) 100°C | MU | 7.3 | 8.0 | 11 | 15 | 13 | 8-10 | 7.3 | 7.2 |

**Claims**

1. A composition comprising at least the following *components:*

   *a)* at least one ethylene/alpha-olefin/non-conjugated polyene interpolymer comprising a Mooney Viscosity (ML 1+4, 125°C) determined according to ASTM D1646 from 10 to 40, and
   *b)* at least one ethylene/alpha-olefin interpolymer comprising a melt viscosity (177°C) ≤ 50,000 mPa·s; and

   wherein the composition has a Mooney Viscosity (ML 1+4, 100°C) determined according to ASTM D1646 from 6.0 to 10.

2. The composition of claim 1, wherein the at least one interpolymer of *component a* has a Mooney Viscosity (ML1+4 at 125°C) from 18 to 32.

3. The composition of claim 1 or claim 2, wherein the at least one interpolymer of *component a* has a density determined according to ASTM D297 from 0.860 to 0.910 g/cc.

4. The composition of any one of claims 1-3, wherein the at least one interpolymer of *component a* is an EPDM.

5. The composition of any one of claims 1-3, wherein the at least one interpolymer of *component b* has a melt viscosity (177°C) determined according to ASTM D1084 from 5,000 to 24,000 mPa·s.

6. The composition of any one of claims 1-5, wherein the at least one interpolymer of *component b* has a melting point (Tm) determined by DSC according to the description from 64°C to 74°C.

7. The composition of any one of claims 1-6, wherein the at least one interpolymer of *component b* is an ethylene/alpha-olefin copolymer.

8. The composition of any one of claims 1-7, wherein the composition has a Mooney Viscosity (ML1+4 at 100°C) from 6.8 to 8.5.

9. The composition of any one of claims 1-8, wherein the ratio of the density of the at least one interpolymer of *component a* to the density determined according to ASTM D297 of the at least one interpolymer of *component b* is from 0.970 to 1.00.

10. The composition of any one of claims 1-9, wherein the composition further comprises one or more fillers *(component d)*.

11. The composition of any one of claims 1-10, wherein the composition further comprises at least one crosslinking agent.

12. The composition of any one of claims 1-11, wherein the composition further comprises a blowing agent.

13. The composition of any one of claims 1-12, wherein the composition, after thermal treatment at a temperature of 180°C, has a [(MH-ML)/ tc90 ] value from 2.0 to 5.0 dN*m/min, wherein MH, ML and tc90 are determined according to the description.

14. An article comprising at least one component formed from the composition of any one of claims 1-13.

15. A process to form a crosslinked composition, said process comprising thermally treating the composition of any one of claims 1-13.


**Patentansprüche**

1. Zusammensetzung, umfassend mindestens die folgenden *Komponenten:*

   *a)* mindestens ein Ethylen/Alpha-Olefin/nicht-konjugiertes Polyen-Interpolymer, umfassend eine Mooney-Viskosität (ML 1+4, 125 °C), bestimmt gemäß ASTM D1646, von 10 bis 40, und

*b)* mindestens ein Ethylen/Alpha-Olefin-Interpolymer, umfassend eine Schmelzviskosität (177 °C) ≤ 50.000 mPa s; und
wobei die Zusammensetzung eine gemäß ASTM D1646 bestimmte Mooney-Viskosität (ML 1+4, 100°C) von 6,0 bis 10 aufweist.

2. Zusammensetzung nach Anspruch 1, wobei das mindestens eine Interpolymer aus *Komponente a* eine Mooney-Viskosität (ML1+4 bei 125 °C) von 18 bis 32 aufweist.

3. Zusammensetzung nach Anspruch 1 oder 2, wobei das mindestens eine Interpolymer aus *Komponente a* eine gemäß ASTM D297 bestimmte Dichte von 0,860 bis 0,910 g/cm$^3$ aufweist.

4. Zusammensetzung nach einem der Ansprüche 1 bis 3, wobei das mindestens eine Interpolymer aus *Komponente a* ein EPDM ist.

5. Zusammensetzung nach einem der Ansprüche 1 bis 3, wobei das mindestens eine Interpolymer aus *Komponente b eine* Schmelzviskosität (177 °C), bestimmt nach ASTM D1084, von 5.000 bis 24.000 mPa s aufweist.

6. Zusammensetzung nach einem der Ansprüche 1 bis 5, wobei das mindestens eine Interpolymer aus *Komponente b* einen durch DSC bestimmten Schmelzpunkt (Tm) gemäß der Beschreibung von 64 °C bis 74 °C aufweist.

7. Zusammensetzung nach einem der Ansprüche 1 bis 6, wobei das mindestens eine Interpolymer aus *Komponente b* ein Ethylen/Alpha-Olefin-Copolymer ist.

8. Zusammensetzung nach einem der Ansprüche 1 bis 7, wobei die Zusammensetzung eine Mooney-Viskosität (ML1+4 bei 100 °C) von 6,8 bis 8,5 aufweist.

9. Zusammensetzung nach einem der Ansprüche 1 bis 8, wobei das Verhältnis der Dichte des mindestens einen Interpolymers von *Komponente a zu* der Dichte, bestimmt nach ASTM D297 des mindestens einen Interpolymers von *Komponente b* zwischen 0,970 und 1,00 liegt.

10. Zusammensetzung nach einem der Ansprüche 1 bis 9, wobei die Zusammensetzung ferner ein oder mehrere Füllstoffe *(Komponente b)* umfasst.

11. Zusammensetzung nach einem der Ansprüche 1 bis 10, wobei die Zusammensetzung ferner ein Vernetzungsmittel umfasst.

12. Zusammensetzung nach einem der Ansprüche 1 bis 11, wobei die Zusammensetzung ferner ein Treibmittel umfasst.

13. Zusammensetzung nach einem der Ansprüche 1 bis 12, wobei die Zusammensetzung nach der Wärmebehandlung bei einer Temperatur von 180 °C einen [(MH-ML)/ tc90]-Wert von 2,0 bis 5,0 dN*m/min aufweist, wobei MH, ML und tc90 gemäß der Beschreibung bestimmt werden.

14. Artikel, umfassend mindestens eine Komponente, die aus der Zusammensetzung nach einem der Ansprüche 1 bis 13 ausgebildet ist.

15. Verfahren zum Ausbildung einer vernetzten Zusammensetzung, das Verfahren umfassend die Wärmebehandlung der Zusammensetzung nach einem der Ansprüche 1 bis 13.

**Revendications**

1. Composition comprenant au moins les *composants* suivants :

a) au moins un interpolymère d'éthylène/alpha-oléfine/polyène non conjugué comprenant une viscosité Mooney (ML 1+4, 125 °C) déterminée selon ASTM D1646 allant de 10 à 40, et
*b)* au moins un interpolymère d'éthylène/alpha-oléfine comprenant une viscosité à l'état fondu (177 °C) ≤ 50 000 mPa·s ; et
dans laquelle la composition a une viscosité Mooney (ML 1+4, 100 °C) déterminée selon ASTM D1646 allant de 6,0 à 10.

**2.** Composition selon la revendication 1, dans laquelle l'au moins un interpolymère du *composant a* a une viscosité Mooney (ML1+4 à 125 °C) allant de 18 à 32.

**3.** Composition selon la revendication 1 ou la revendication 2, dans laquelle l'au moins un interpolymère du *composant a* a une masse volumique déterminée selon ASTM D297 allant de 0,860 à 0,910 g/cm$^3$.

**4.** Composition selon l'une quelconque des revendications 1 à 3, dans laquelle l'au moins un interpolymère du *composant a* est un EPDM.

**5.** Composition selon l'une quelconque des revendications 1 à 3, dans laquelle l'au moins un interpolymère du *composant b* a une viscosité à l'état fondu (177 °C) déterminée selon ASTM D1084 allant de 5000 à 24 000 mPa·s.

**6.** Composition selon l'une quelconque des revendications 1 à 5, dans laquelle l'au moins un interpolymère du *composant b* a un point de fusion (Tm) déterminé par DSC selon la description allant de 64 °C à 74 °C.

**7.** Composition selon l'une quelconque des revendications 1 à 6, dans laquelle l'au moins un interpolymère du *composant b* est un copolymère d'éthylène/alpha-oléfine.

**8.** Composition selon l'une quelconque des revendications 1 à 7, dans laquelle la composition a une viscosité Mooney (ML1+4 à 100 °C) allant de 6,8 à 8,5.

**9.** Composition selon l'une quelconque des revendications 1 à 8, dans laquelle le rapport de la masse volumique de l'au moins un interpolymère du *composant a* à la masse volumique déterminée selon ASTM D297 de l'au moins un interpolymère du *composant b* va de 0,970 à 1,00.

**10.** Composition selon l'une quelconque des revendications 1 à 9, dans laquelle la composition comprend en outre une ou plusieurs charges (*composant d*).

**11.** Composition selon l'une quelconque des revendications 1 à 10, dans laquelle la composition comprend en outre au moins un agent de réticulation.

**12.** Composition selon l'une quelconque des revendications 1 à 11, dans laquelle la composition comprend en outre un agent porogène.

**13.** Composition selon l'une quelconque des revendications 1 à 12, dans laquelle la composition, après traitement thermique à une température de 180 °C, a une valeur [(MH-ML)/tc90] allant de 2,0 à 5,0 dN*m/min dans laquelle MH, ML et tc90 sont déterminés selon la description.

**14.** Article comprenant au moins un composant formé à partir de la composition selon l'une quelconque des revendications 1 à 13.

**15.** Procédé pour former une composition réticulée, ledit procédé comprenant un traitement thermique de la composition selon l'une quelconque des revendications 1 à 13.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63265652
- US 8389634 B
- CN 107418061 A
- WO 2006004750 A
- US 20150376385 A
- WO 2013039739 A1
- WO 2011079207 A1
- WO 2019157688 A1
- WO 2014035467 A1
- US 7199180 B

**Non-patent literature cited in the description**

- **WILLIAMS** ; **WARD**. *J. Polym. Sci., Polym. Let.*, 1968, vol. 6, 621